# EUROPEAN PATENT APPLICATION

(11) **EP 1 681 841 A1**
(43) Date of publication of application: **19.07.2006**
(21) Application number: 06000729.1
(22) Date of filing: 13.01.2006
(51) Int. Cl.: H04M 1/725, G06F 21/00

(54) **Device and method for displaying characters of a message in the same colour of the background in a mobile communication terminal**

(30) Priority: 14.01.2005 KR 2005003872
(71) Applicant: LG Electronics Inc., Yongdungpo-Gu Seoul (KR)
(72) Inventor: Uh, Soo-Ji, Seoul, South Korea (KR)
(74) Representative: Beyer, Andreas

(57) **Abstract**

A message display method for a mobile communication terminal comprising changing either a color of letters of a message displayed on a screen or a color of a background of the message or both to be similar to or the same as each other.

## Description

### BACKGROUND OF THE INVENTION

### Field of the Invention

The present invention relates to a mobile communication terminal, and more particularly, to a message display unit and a message display method for a mobile communication terminal.

### Description of the Related Art

Mobile communication terminals can be used by users to perform voice communications and send text messages as well.

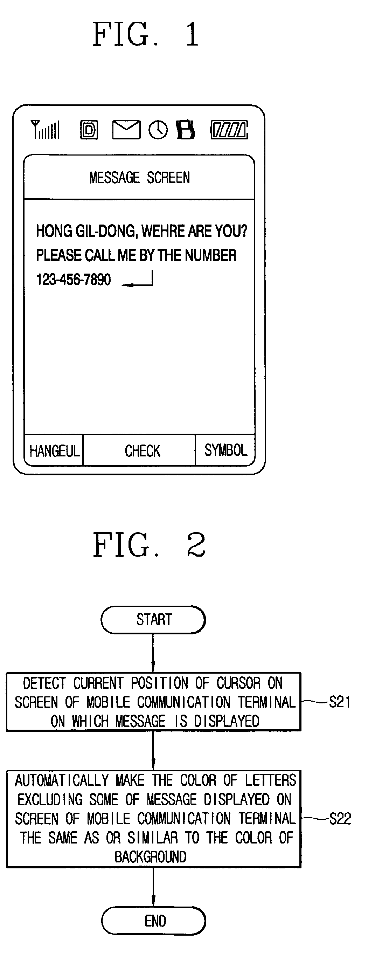

A related art text message display method for a mobile communication terminal will be described with reference to FIG. 1.

As illustrated in FIG. 1, according to the conventional message display method, when the user wishes to compose a text message (e.g., "Hong Gil-dong, where are you? Please call me at 123-456-7890."), such message is displayed on the screen of the mobile communication terminal as the user inputs his message. However, certain text messages may contain sensitive information or the user may not wish that others would read it during inputting. Thus, although the user may wish to conceal portions of or all of the text message contents, the displaying of the message during inputting allows others to read the message, and the message contents cannot be properly protected from nosy onlookers.

Also, when the user checks a received text message using his mobile communication terminal, the message being displayed on the screen of the mobile communication terminal is visible to people around the user as well. Therefore, it is not possible to hide the contents the text message that the user wishes to conceal from others.

### SUMMARY OF THE INVENTION

One aspect of the present invention is that the present inventors recognized the problems of the related art. In order to solve the above related art problems, it is an object of the present invention to provide a message display unit and a message display method for a mobile communication terminal in which the font color of (at least a part of) a message displayed is selectively matched to be (the same as or) similar with the background color or the background color of (at least a part of) the screen is selectively matched to be (the same as or) similar with the font color of the message so that others cannot easily see the message to thus protect (hide) the contents thereof.

In order to achieve the above object, there is provided a message display unit for a mobile communication terminal comprising a display unit for displaying the color of the letters of a message of a mobile communication terminal and the color of the background of the message and a controlling unit for controlling the display unit so that the color of the letters of the displayed message is automatically made to be similar to (or the same as) the color of the background.

Also, the present invention provides a message display unit for a mobile communication terminal comprising a display unit for displaying the color of the letters of a message of a mobile communication terminal and the color of the background of the message and a controlling unit for controlling the display unit so that the color of the background of the letters of the displayed message is automatically made to be similar to (or the same as) the color of the letters.

There is also provided a message display method for a mobile communication terminal comprising the step of automatically making the color of the letters of a message displayed on a screen of a mobile communication terminal to be similar to (or the same as) the color of a background.

There is also provided a message display method for a mobile communication terminal comprising the step of automatically making the color of the background of the letters of a message displayed on a screen of a mobile communication terminal to be similar to (or the same as) the color of the letters.

### BRIEF DESCRIPTION OF THE DRAWINGS

These and/or other objects and advantages of the invention will become apparent and more readily appreciated from the following description of preferred embodiments, taken in conjunction with the accompanying drawings of which:
FIG. 1 illustrates an example of a screen on which a message is displayed of a conventional mobile communication terminal.
FIG. 2 is a flowchart illustrating an exemplary message display method for a mobile communication terminal according to an exemplary embodiment of the present invention.
FIG. 3 illustrates an example of a message displayed on the screen of the mobile communication terminal in accordance with FIG. 2.
FIG. 4 is a flowchart illustrating an exemplary message display method for a mobile communication terminal according to another embodiment of the present invention.
FIG. 5 illustrates an example of a message displayed on the screen of the mobile communication terminal in accordance with FIG. 4.
FIG. 6 shows an exemplary structure of a mobile communication terminal according to the present invention.

### DETAILED DESCRIPTION OF PREFERRED EMBODIMENTS

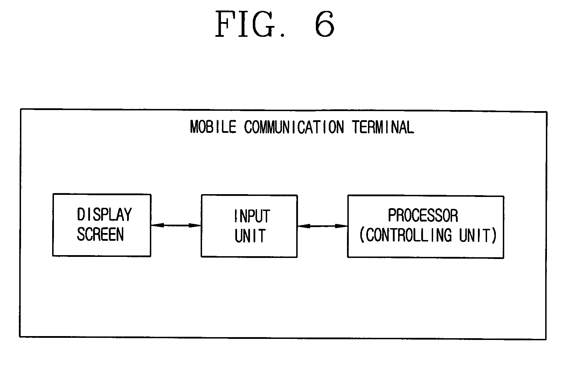

Preferred embodiments of a message display unit and a message display method for a mobile communication terminal according to the present invention in which the font color of a message displayed on a mobile communication terminal is made to be similar to (or substantially the same as) the background color or the background color of the displayed message is made to be similar to (or substantially the same as) the font color of the message displayed such that others cannot easily see the displayed message to protect the contents thereof will be described in detail with reference to FIGS. 2 to 6.

For the sake of convenience, the differences from the related art message display method will be described with reference to the same message (i.e., "Hong Gil-dong, where are you? Please call me by the number 123-456-7890") as shown in FIG. 1. Also, it is assumed that the color of the background of the screen of the mobile communication terminal is white (or a relatively light color) and that the color of the message is black (or a relatively dark color). Here, the color of the background and the color of the message may be changed by a user. Namely, the features of the present invention are applicable to various color combinations for the text font and the background.

First, a display device of a mobile communication terminal according to an embodiment of the present invention includes a display unit for displaying a message using a dark colored font and a light colored background, and a controlling unit for controlling the display unit so that the color of the letters of the displayed message is automatically made similar to (or the same as) the color of the background of the message.

FIG. 2 is a flowchart illustrating a message display method for a mobile communication terminal according to an embodiment of the present invention.

As illustrated in FIG. 2, the message display method for the mobile communication terminal according to an embodiment of the present invention includes a step S21 of detecting the current position of a cursor on the screen of the mobile communication terminal where a message is displayed, and a step S22 of automatically making the color of the letters of the message displayed on the screen of the mobile communication terminal to be similar to (or the same as) the color of the background of the message.

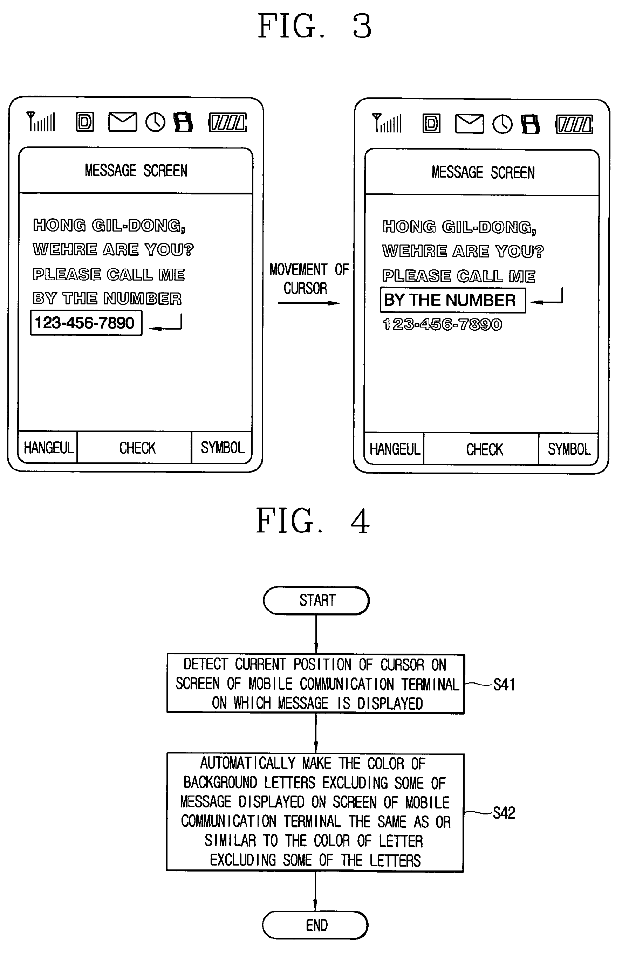

An exemplary message display method for the mobile communication terminal according to an embodiment of the present invention will be described in detail with reference to FIG. 3.

FIG. 3 illustrates an example of a message displayed on the screen of the mobile communication terminal in accordance with FIG. 2.

First, the case in which the letters of the message refer to those letters excluding the letters on the line where the cursor displayed on the screen of the mobile communication terminal will be described.

As illustrated in FIG. 1, according to the related art message display method for the mobile communication terminal, all of the letters of the message are clearly displayed on the screen in contrast to the background.

However, according to the message display method for the mobile communication terminal according to an embodiment of the present invention, as illustrated in FIG. 3, only the letters on the line where a cursor is currently positioned are displayed in their original color (for example, black), while the letters on the lines where the cursor is not positioned are displayed to have a color that is similar to (for example, gray) or the same as (for example, white) the background so that the letters on the lines where the cursor is not positioned cannot be easily seen. As such, the contents of at least some parts of the message (e.g., the lines excluding the line where the cursor is located) may be less likely to be seen by others.

That is, the controlling unit may display only the characters (i.e., 123-456-7890) on the line where the cursor is currently positioned is their original color (for example, black) among the characters in the entire message "Hong Gil-dong, where are you? Please call me by the number 123-456-7890" and displays the "remaining" characters (Hong Gil-dong, where are you? Please call me by the number) of the other lines to have a similar color (for example, gray) or the same color (for example, white) as the background so that the characters on the other lines cannot be easily seen by others.

When the user moves the cursor to be positioned in another line (for example, "...by the number"), the controlling unit displays only the letters (by the number) on the line where the cursor is currently positioned to have the original color (for example, black) of the letters on the display unit and displays the letters (Hong Gil-dong, where are you? Please call me 123-456-7890) on the other lines to have the color (for example, gray) being the same as or similar to the color (for example, white) of the background on the display unit so that the letters on the other lines on the display unit cannot be easily seen by the others.

Next, the case in which the letters of the message are the letters excluding a certain number of letters located before the cursor displayed on the screen of the mobile communication terminal will be described.

For example, in the case where the certain number of letters is set to be 5 and a user wishes to create the sentence "Where is Mr. Hong?", when the user enters the letter "M" after "Where is", since the cursor is currently positioned at "M", the controlling unit displays the previously input five letters (that is, "ere is") on the display unit to have the original color (for example, black) of the letters and displays the letters excluding these five letters (that is, "Wh") on the display unit to have the color (for example, gray) being the same as or similar to the color (for example, white) of the background.

Only a certain number of letters located before the current position of the cursor are displayed to have the original color (for example, black) while the other letters are displayed to have the color (for example, gray) being the same as or similar to the color (for example, white) of the background so that the other letters cannot be easily seen to thus protect (hide) the contents of at least a part of the message.

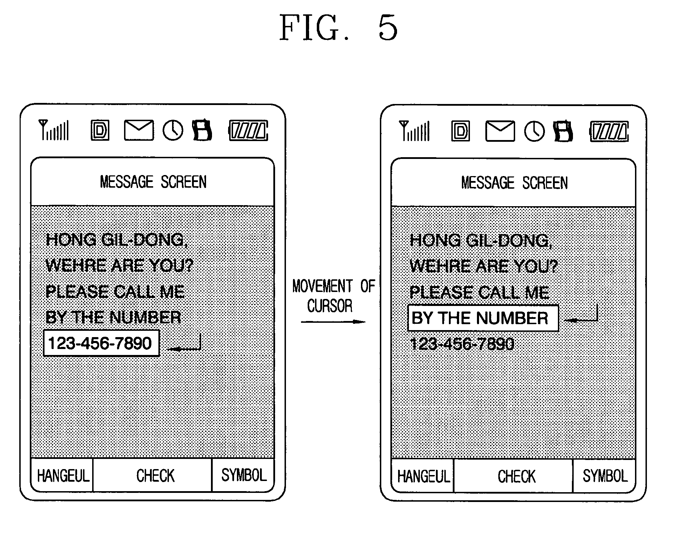

Hereinafter, a message display unit and a message display method for a mobile communication terminal according to another embodiment of the present invention in which the color of the background of the letters of the message displayed on the screen of the mobile communication terminal is made the same as the color of the letters so that the others cannot easily read the displayed message will be described with reference to FIGs. 4 and 5.

First, a display device of a mobile communication terminal according to another embodiment of the present invention includes a display unit for displaying the color of the letters of the message of the mobile communication terminal and the color of the background of the message and a controlling unit for controlling the display unit so that the color of the background of the displayed message is automatically made the same as or similar to the color of the letters of the message.

FIG. 4 is a flowchart illustrating a message display method for a mobile communication terminal according to another embodiment of the present invention.

As illustrated in FIG. 4, the message display method for the mobile communication terminal according to another embodiment of the present invention includes a step S41 of detecting the current position of a cursor on the screen of the mobile communication terminal where a message is displayed and a step S42 of automatically making the color of the background of the message displayed on the screen of the mobile communication terminal the same as or similar to the color of the letters of the message based on the position detected position of the cursor.

The message display method for the mobile communication terminal according to another embodiment of the present invention will be described in detail with reference to FIG. 5.

FIG. 5 illustrates an example of a message displayed on the screen of the mobile communication terminal in accordance with FIG. 4.

First, the case in which the letters of the message are the letters excluding the letters on the line where the cursor displayed on the screen of the mobile communication terminal is positioned will be described.

As illustrated in FIG. 1, according to the conventional message display method for the mobile communication terminal, all of the letters of the message are clearly displayed on the screen in contrast to the background.

However, according to the message display method for the mobile communication terminal according to an embodiment of the present invention, as illustrated in FIG. 5, only the background of the letters on the line where a cursor is currently positioned is displayed to have the original color (for example, white) of the background and the background of the letters on the lines where the cursor is not positioned is displayed to have the color (for example, gray) being the same as or similar to the color (for example, white) of the letters on the other lines where the cursor is not positioned, so that the letters on the lines where the cursor is not positioned cannot be easily seen, to thus protect the contents of at least a part of the message from being seen by others.

That is, the controlling unit displays only the background of the letters (123-456-7890) on the line where the cursor is currently positioned to have the original color (for example, black) of the background of the message "Hong Gil-dong, where are you? Please call me by the number 123-456-7890." on the display unit and displays the background of the letters (Hong Gil-dong, where are you? Please call me by the number) on the other lines to have the color (for example, black) the same as or similar to the color (for example, gray) of the letters on the other lines on the display unit so that the letters on the other lines on the display unit cannot be easily seen by others.

When a user moves the cursor so that the cursor is positioned in another line (for example, "...by the number"), the controlling unit displays only the background of the letters (by the number) on the line where the cursor is currently positioned to have the original color (for example, white) of the background on the display unit and displays the background of the letters (Hong Gil-dong, where are you? Please call me 123-456-7890) on the other lines to have the color (for example, black) the same as or similar to the color (for example, gray) of the letters on the other lines on the display unit so that the letters on the other lines on the display unit cannot be easily seen by the others.

Next, the case in which the letters of the message are the letters excluding a certain number of letters previously before the cursor displayed on the screen of the mobile communication terminal will be described.

For example, in the case where the certain number of letters is set as 5 and a user wishes to enter "Where is Mr. Hong?", when the user inputs "M" after inputting "Where is", since the cursor is positioned at "M", the controlling unit displays the background of the previously created five letters, that is, "ere is" on the display unit to have the original color (for example, white) of the background and displays the background of the letters excluding the five letters (that is, "Wh") on the display unit to have the color (for example, gray) the same as or similar to the color (for example, white) of the letters excluding the five letters.

Only the background of a certain number of letters located before the current position of the cursor is displayed to have the original color (for example, white) of the background, and the background of the other letters is displayed to have the color (for example, gray) that is the same as or similar to the color (for example, black) of the certain number of letters, so that the other letters cannot be easily seen, to thus protect the contents of the message from being read by others.

The "similar color(s)" described above refers to one or more colors that do not allow others (except the user) to easily read the message displayed on the screen of the mobile communication terminal. For example, according to the embodiment of the present invention of FIG. 2, the similar colors are gray and light gray when the color of the letters is white and the color of the background of the screen is black, while the similar colors are orange, pink, and dark orange when the color of the letters is blue and the color of the background of the screen is red.

As described above, according to the message display method for the mobile communication terminal of the present invention, when a user inputs a message, the current position of a cursor is detected and the letters excluding several letters based on the current position of the cursor are displayed not to be easily seen or the color of the background is displayed to be different so that the others around the user cannot easily read the contents of the letters excluding the several letters. Therefore, the contents (for example, a telephone number, an account number, a secret number, and other private information) that should not be disclosed cannot be easily seen by others around the user, so that it is possible to protect the contents of the message and the private information of the user.

The present invention provides a message display apparatus for a mobile communication terminal, comprising a displaying unit for displaying a color of letters of a message and a color of a background of the message; and a controlling unit for controlling the displaying unit so that the message can be better read in a display region set by a user than in a display region that has not been set by the user.

The display region set by the user is a region preset based on at least one of lines, letters, words, and cursors.

The controlling unit changes a color of letters or a color of a background of a region excluding the display region set by the user, or lightly changes the color of letters of a region excluding the display region set by the user.

A message display method for a mobile communication terminal comprises displaying a message on a displaying unit, and displaying the displayed message only in a display region set by a user. The present invention also provides a message display method for a mobile communication terminal, comprising a first step of displaying a message on a displaying unit, and a second step of displaying the message so that the message can be better read in a display region set by a user than in a display region that has not been set by the user.

In the second step, a color of letters or a color of a background of a region excluding the display region set by the user is changed, or the color of letters of a region excluding the display region set by the user is lightly changed.

The present invention also provides a mobile communication terminal comprising: a display screen to display information; an input device to allow a user to input information and move a cursor on the display screen; and a processor cooperating with the display screen and the input device to perform the steps of, detecting a position of the cursor on the display screen, and processing the displayed information based upon the detected position of the cursor, such that at least a portion of the displayed information cannot be easily recognized.

The detecting and processing steps may be part of a private viewing option that is selectable by the user. The private viewing option may be performed while the user inputs a text message or while the user reads a received text message or both.

The displayed information may comprise text and background. The processing may be performed by graphically changing the text, the background, or both, such that the text cannot be easily discerned. A text color, a background color, or both may be changed to be similar or the same with each other. The processing may be performed on the entire display screen excluding the entire line of text where the cursor is located or excluding a certain number of text characters located before the cursor.

The cursor may be moved by the user when the user inputs a text message or when the user reads a received text message. The cursor may move automatically to select each line of text to allow the user to read a received text message in a line-by-line manner, while other portions of text cannot be easily discerned. A speed of the cursor movement may be selectable by the user.

The processing may be performed by graphically changing the text, the background, or both, such that the text is obscured except for a window region in which the text can be easily discerned. A size of the window region may be within a range from one character length up to an entire line of the display screen. A size of the window region may be adjustable by the user.

The processing may be achieved by graphically concealing the displayed information such that only portions thereof can be visually recognized.

To implement the various features described above, the present invention can employ various types of hardware and/or software components (modules). For example, different hardware modules may contain various circuits and components necessary to perform the steps of the above method. Also, different software modules (executed by processors and/or other hardware) may contain various codes and protocols necessary to perform the steps of the present invention method.

As described above, according to the present invention, the color of a part of the message displayed on the mobile communication terminal is made the same as the color of the background or the color of the background of a part of the displayed message is made the same as the color of the letters so that the others cannot easily see the contents of the displayed message to protect the contents of the displayed message against the others.

The invention being thus described, it can be clearly understood that the features may be varied in many ways. Such variations are not to be regarded as a departure from the spirit and scope of the invention, and all such modifications as would be obvious to one skilled in the art are intended fall within the scope of the following claims.

## Claims

1. A message display method for a mobile communication terminal, comprising:
displaying a message on a displaying unit; and
displaying the displayed message only in a display region set by a user.

2. A message display method for a mobile communication terminal, comprising a first step of displaying a message on a displaying unit; and
a second step of displaying the message so that the message can be better read in a display region set by a user than in a display region that has not been set by the user.

3. The method of claim 2, wherein the display region set by a user comprises a region preset based on at least one of lines, letters, words, and cursors.

4. The method of claim 2, wherein in the second step, a color of letters or a color of a background of a region excluding the display region set by the user is changed, or the color of letters of the region excluding the display region set by the user is lightly changed.

5. A message display apparatus for a mobile communication terminal, comprising:
a displaying unit for displaying a color of letters of a message and a color of a background of the message; and
a controlling unit for controlling the displaying unit so that the message can be better read in a display region set by a user than in a display region that has not been set by the user.

6. The apparatus of claim 5, wherein the display region set by the user comprises a region preset based on at least one of lines, letters, words, and cursors.

7. The apparatus of claim 5, wherein the controlling unit changes a color of letters or a color of a background of a region excluding the display region set by the user, or lightly changes the color of letters of a region excluding the display region set by the user.

8. A mobile communication terminal comprising:
a display screen to display information;
an input device to allow a user to input information and move a cursor on the display screen; and
a processor cooperating with the display screen and the input device to perform the steps of,
detecting a position of the cursor on the display screen, and
processing the displayed information based upon the detected position of the cursor, such that at least a portion of the displayed information cannot be easily recognized.

9. The terminal of claim 8, wherein the detecting and processing steps are part of a private viewing option that is selectable by the user.

10. The terminal of claim 9, wherein the private viewing option is performed while the user inputs a text message or while the user reads a received text message or both.

11. The terminal of claim 8, wherein the displayed information comprises text and background.

12. The terminal of claim 11, wherein the processing is performed by graphically changing the text, the background, or both, such that the text cannot be easily discerned.

13. The terminal of claim 12, wherein a text color, a background color, or both are changed to be similar or the same with each other.

14. The terminal of claim 13, wherein the processing is performed on the entire display screen excluding the entire line of text where the cursor is located or excluding a certain number of text characters located before the cursor.

15. The terminal of claim 14, wherein the cursor is moved by the user when the user inputs a text message or when the user reads a received text message.

16. The terminal of claim 14, wherein the cursor moves automatically to select each line of text to allow the user to read a received text message in a line-by-line manner, while other portions of text cannot be easily discerned.

17. The terminal of claim 16, wherein a speed of the cursor movement is selectable by the user.

18. The terminal of claim 11, wherein the processing is performed by graphically changing the text, the background, or both, such that the text is obscured except for a window region in which the text can be easily discerned.

19. The terminal of claim 18, wherein a size of the window region is within a range from one character length up to an entire line of the display screen.

20. The terminal of claim 18, wherein a size of the window region is adjustable by the user.

21. The terminal of claim 11, wherein the processing is achieved by graphically concealing the displayed information such that only portions thereof can be visually recognized.
